Europäisches Patentamt

European Patent Office

Office européen des brevets

(19)

(11) Veröffentlichungsnummer : **0 181 004**
**B1**

(12)    EUROPÄISCHE PATENTSCHRIFT

(45) Veröffentlichungstag der Patentschrift :
28.09.88

(51) Int. Cl.⁴ : **F 16 D 65/56**

(21) Anmeldenummer : 85114240.6

(22) Anmeldetag : 08.11.85

(54) Nachstellbare Betätigungsvorrichtung für Bremsen, insbesondere Fahrzeug-Trommelbremsen.

(30) Priorität : 08.11.84 DE 8432744 U

(43) Veröffentlichungstag der Anmeldung :
14.05.86 Patentblatt 86/20

(45) Bekanntmachung des Hinweises auf die Patenterteilung : 28.09.88 Patentblatt 88/39

(84) Benannte Vertragsstaaten :
DE FR GB IT

(56) Entgegenhaltungen :
DE-A- 1 655 405
DE-A- 2 757 050
FR-A- 2 152 003
FR-A- 2 286 301
GB-A- 1 107 366
GB-A- 1 128 167
GB-A- 1 355 959
GB-A- 1 412 151
US-A- 3 540 554
US-A- 3 822 003

(73) Patentinhaber : LUCAS INDUSTRIES public limited
company
Great King Street
Birmingham, B19 2XF West Midlands (GB)

(72) Erfinder : Gockel, Harald
Ringstrasse 79a
D-5413 Bendorf (DE)
Erfinder : Thewaldt, Reiner
Althausweg 8
D-5413 Bendorf (DE)
Erfinder : Giering, Wilfried
Poststrasse 20
D-5442 Mendig (DE)

(74) Vertreter : Wuesthoff, Franz, Dr.-Ing. et al
Patentanwälte Wuesthoff -v. Pechmann-Behrens-
Goetz Schweigerstrasse 2
D-8000 München 90 (DE)

## Beschreibung

Die Erfindung betrifft eine nachstellbare Betätigungsvorrichtung für Bremsen, insbesondere Fahrzeug-Trommelbremsen, mit

- einem Gehäuse, das eine Bohrung und eine dazu konzentrische Kupplungsfläche aufweist,
- mindestens einem Stößel von veränderbarer Länge, der in der Bohrung verschiebbar geführt ist und zwei durch eine selbsthemmende Gewindepaarung miteinander verbundene Gewindeteile aufweist,
- einem Kupplungsteil, das der Kupplungsfläche des Gehäuses zugeordnet und mit einem der beiden Gewindeteile durch eine selbsthemmungsfreie Gewindepaarung verbunden ist,
- einem Stützteil, das am Gehäuse befestigt ist, und eine Öffnung aufweist, durch die sich mindestens das andere der beiden Gewindeteile hindurcherstreckt,
- einer Kupplungsfeder, die zwischen dem Stützteil und dem Kupplungsteil eingespannt und bestrebt ist, dieses an der Kupplungsfläche anliegend zu halten, und
- einer Dichtmanschette, die in bezug auf das Gehäuse außerhalb des Stützteils angeordnet ist und die Gewindepaarungen sowie das Kupplungsteil nach außen abdichtet.

Bei bekannten Betätigungsvorrichtungen dieser Gattung (GB-A-14 12 151 und GB-A-20 80 894) ist das Stützteil becherförmig gestaltet, auf eine zylindrische Außenfläche des Gehäuses aufgesteckt und an dieser reibschlüssig oder durch Verstemmen befestigt. Die Dichtmanschette ist mit einem ihrer Enden an der Außenseite des becherförmigen Stützteils und mit ihrem anderen Ende an dem durch die Öffnung des Stützteils nach außen ragenden Gewindeteil befestigt.

Bei diesen bekannten Betätigungsvorrichtungen läßt sich eine dichte Verbindung von Dichtmanschette und Stützteil durch Anvulkanisieren erzielen. Dies hat aber den Nachteil, daß die Dichtmanschette, wenn sie beispielsweise durch Wärmeeinwirkung brüchig geworden ist, nicht ohne das Stützteil ausgewechselt werden kann. Wenn aber das Stützteil entfernt worden ist, verlieren Kupplungsfeder und Kupplungsteil ihren Halt und können herausfallen, was die Möglichkeit einschließt, daß sie verlorengehen oder beim Wiedereinbau falsch angeordnet werden. Wenn aber die Dichtmanschette an das Stützteil nicht anvulkanisiert ist, besteht die Gefahr, daß die Verbindung zwischen beiden undicht wird, wenn das Stützteil verformt wird, beispielsweise durch unvorsichtige Handhabung bei der Montage oder durch Steinschlag im Betrieb. Unabhängig davon besteht die Gefahr, daß im Betrieb Schlamm, Salzwasser oder andere abrasive und/oder korrosive Stoffe dort eindringen, wo das Stützteil am Gehäuse befestigt ist, da eine dauerhafte Dichtheit dieser Befestigung kaum garantiert werden kann.

Aus diesen Gründen läßt die Zuverlässigkeit der Nachstellung bekannter gattungsgemäßer Betätigungsvorrichtungen bei schwierigen Betriebsbedingungen zu wünschen übrig. Die zum Ausgleich von Bremsbelagverschleiß erforderlichen Nachstellungen können infolge von Verschmutzung oder Korrosion innerhalb der Betätigungsvorrichtung unterbleiben oder verspätet erst nach mehrfacher Bremsbetätigung stattfinden. Es kann dann erforderlich sein, die Betätigungsvorrichtung insgesamt oder wesentliche Teile davon vorzeitig auszuwechseln.

Der Erfindung liegt deshalb die Aufgabe zugrunde, eine Betätigungsvorrichtung der eingangs beschriebenen Gattung derart weiterzubilden, daß ihre Funktionstüchtigkeit auch bei Einsatz unter härtesten Betriebsbedingungen möglichst lange erhalten bleibt und die Wartung der Betätigungsvorrichtung erleichtert wird.

Die Aufgabe ist erfindungsgemäß durch die Merkmale des Patentanspruchs 1 gelöst.

Das erste kennzeichnende Merkmal ist zwar aus der DE-A2757050 (rechter Teil der Fig. 2) bekannt. Dort ist auch ein Kragen — insoweit übereinstimmend mit dem zweiten kennzeichnenden Merkmal — in einer Bohrung eines Gehäuses befestigt. Dabei handelt es sich jedoch um das Gehäuse einer Bremse (Fig. 1 der DE-A-2757050), nicht um das Gehäuse der zugehörigen nachstellbaren Betätigungsvorrichtung. Ein Flansch des in Fig. 2 der DE-A-2757050 rechts dargestellten Befestigungsrings ist zwar — insoweit übereinstimmend mit dem dritten kennzeichnenden Merkmal — an einem ringförmigen elastischen Rand der Dichtmanschette befestigt; dieser ringförmige elastische Rand ist jedoch nicht zwischen dem Flansch und einer Stirnfläche des Gehäuses eingespannt.

Mit der Erfindung wird erreicht, daß die Dichtmanschette leicht abgenommen werden kann, ohne daß das Stützteil abgenommen zu werden braucht; auch die Gefahr, daß das Stützteil versehentlich abgenommen wird, ist durch die getrennte Befestigung am Gehäuse vermindert, wenn nicht ausgeschlossen. Die Festigkeit des Preßsitzes ist unabhängig von der Vorspannung der Kupplungsfeder.

Man hat infolgedessen die Möglichkeit, einen leichten Preßsitz für die Befestigung der Dichtmanschette zu wählen, auch wenn die Kupplungsfeder mit großer Vorspannung eingebaut wird. Befestigungs- und Abdichtungsfunktion des steifen Befestigungsrings sind vollständig voneinander getrennt, und beide sind unabhängig von der Art der Befestigung des Stützteils und den Belastungen, denen diese Befestigung standhalten muß, beispielsweise infolge von Massenträgheitskräften, die im Betrieb auftreten können. Bei abgenommener Dichtmanschette kann die im übrigen vollständig montierte erfindungsgemäße Betätigungsvorrichtung mit Fett gefüllt werden, ohne daß die Gefahr besteht, daß die Kupplungsfeder herausspringt und dann auch das Kupplungsteil herausfällt.

Für die lösbare Halterung des Stützteils in der Erweiterung der Bohrung gibt es zahlreiche an sich bekannte Gestaltungsmöglichkeiten, beispielsweise als Bajonettverschluß. Stattdessen kann die Anlagefläche für das Stützteil von einem Sicherungsring gebildet sein, der elastisch in eine Ringnut in der Erweiterung der Bohrung eingerastet ist. Vorzugsweise weist das Stützteil jedoch einen geschlitzten Flansch auf, der unmittelbar in eine Ringnut in der Erweiterung der Bohrung eingerastet ist.

Ein Ausführungsbeispiel der Erfindung wird im folgenden anhand schematischer Zeichnungen mit weiteren Einzelheiten beschrieben. Es zeigt :

Fig.1 einen axialen Schnitt durch eine nachstellbare Betätigungsvorrichtung für Innenbacken-Trommelbremsen von Nutzfahrzeugen,

Fig.2 einen vergrößerten Ausschnitt aus Fig.1,

Fig.3 eine bevorzugte Abwandlung von Fig.2 und

Fig.4 ein Einzelteil aus Fig. 3.

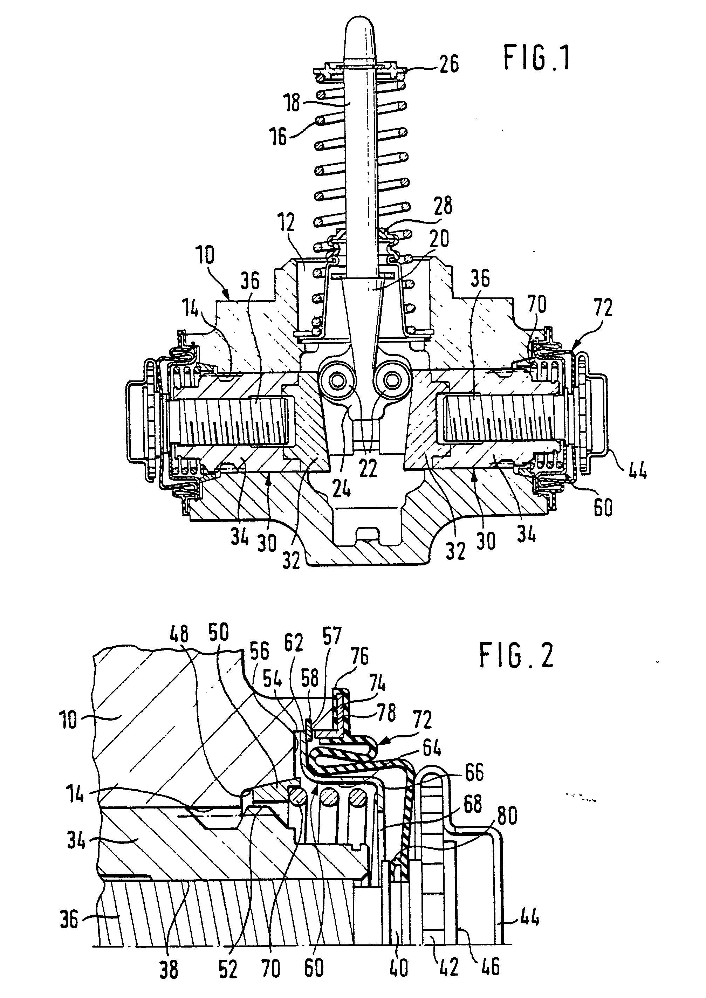

Die dargestellte Betätigungsvorrichtung hat ein Gehäuse 10, das in üblicher Weise etwa T-förmig gestaltet und dazu bestimmt ist, an dem im wesentlichen kreisringförmigen Bremsschild einer Trommelbremse befestigt zu werden. Das Gehäuse 10 hat eine mittige Aussparung 12 und eine querliegende, im wesentlichen zylindrische Bohrung 14. Die mittige Aussparung 12 durchdringt die Bohrung 14, wodurch diese in zwei gleichgroße Abschnitte unterteilt ist ; die Betätigungsvorrichtung ist insgesamt symmetrisch zu der auf die Zeichnungsebene der Fig.1 normalen Mittelebene der Aussparung 12.

Innerhalb der Aussparung 12 ist am Gehäuse 10 ein Ende einer wendelförmigen Druckfeder 16 befestigt ; durch die Druckfeder 16 erstreckt sich axial eine Stange 18, deren eines, vom Gehäuse 10 entferntes Ende für das Zusammenwirken mit einer nicht dargestellten Kraftabgabevorrichtung, beispielsweise einer pneumatischen Kolben-Zylindereinheit, ausgebildet ist. Das andere, innerhalb der mittigen Aussparung 12 angeordnete Ende der Stange 18 ist als Spreizkeil 20 ausgebildet und greift zwischen zwei Rollen 22 ein, die in einem Käfig 24 gelagert sind. Der Käfig 24 ist in bezug auf das Gehäuse 10 und die Stange 18 in deren Längsrichtung verschiebbar. Das vom Gehäuse 10 abgewandte Ende der Stange 18 ist in bezug auf das entsprechende Ende der Druckfeder 16 durch eine Ringscheibe 26 zentriert ; in einem dem Gehäuse 10 näheren Bereich sitzt auf der Stange 18 eine Manschette 28, die gegen das Gehäuse 10 oder ein mit diesem dicht verbundenes Bauteil abdichtet.

Jeder der beiden durch die mittige Aussparung 12 voneinander getrennten Abschnitte der querliegenden Bohrung 14 enthält einen Stößel 30, der im wesentlichen aus einem gehärteten Endstück 32, einem hülsenförmigen Gewindeteil 34 und einem bolzenförmigen Gewindeteil 36 besteht. Das Endstück 32 jedes der beiden Stößel 30 ist gegen Drehen gesichert und bildet eine keilförmige Laufbahn für die benachbarte Rolle 22. Das hülsenförmige Gewindeteil 34 ist innerhalb des zugehörigen Abschnittes der querliegenden Bohrung 14 drehbar und axial verschiebbar geführt und ist mit dem zugehörigen bolzenförmigen Gewindeteil 36 durch eine selbsthemmende Gewindepaarung 38 verbunden.

Das bolzenförmige Gewindeteil 36 hat an einem aus dem hülsenförmigen Gewindeteil 34 und dem Gehäuse 10 herausragenden Endabschnitt eine Ringnut 40, außerhalb davon eine Außenverzahnung 42, die mit einem elastischen Bügel 44 als Verdrehsicherung zusammenwirkt, und schließlich eine ebene Stirnfläche 46, die für das Zusammenwirken mit einem Ende einer zugehörigen Bremsbacke ausgebildet ist.

Rings um jeden der beiden Abschnitte der querliegenden Bohrung 14 ist, gleichachsig mit dieser, eine konische innere Kupplungsfläche 48 ausgebildet, der ein komplementäres, ringförmiges Kupplungsteil 50 zugeordnet ist. Das Kupplungsteil 50 liegt zwischen der Kupplungsfläche 48 und dem zugehörigen hülsenförmigen Gewindeteil 34 und bildet mit diesem eine selbsthemmungsfreie Gewindepaarung 52 mit einem axialen Spiel, das die Größe des Bremslüftspiels der zugehörigen Bremse bestimmt.

An die konische innere Kupplungsfläche 48 jedes der beiden Abschnitte der querliegenden Bohrung 14, in bezug auf das Gehäuse 10 nach außen, schließt sich eine zylindrische Erweiterung 54 an, die mit einer ebenen ringförmigen Schulter 56 beginnt und in geringem Abstand weiter außen eine Ringnut 57 aufweist, in die ein elastischer Sicherungsring 58 eingesetzt ist. Zwischen Schulter 56 und Sicherungsring 58 ist ein topfartiges Stützteil 60 mit einem an ihm ausgebildeten äußeren radialen Flansch 62 gehalten. Das Stützteil 60 hat, anschließend an den äußeren Flansch 62, einen zylindrischen Mittelabschnitt 64, an den sich axial weiter außen ein radial nach innen ragender Flansch 66 mit einer mittigen Öffnung 68 anschließt.

Zwischen dem Flansch 66 und dem ringförmigen Kupplungsteil 50 ist eine als wendelförmige Druckfeder ausgebildete Kupplungsfeder 70 mit Vorspannung eingebaut, so daß das Kupplungsteil 50 an der konischen inneren Kupplungsfläche 48 normalerweise mit einem Druck anliegt, der eine Drehung des Kupplungsteils 50 verhindert.

Axial außerhalb des Stützteils 60 ist eine Dichtmanschette 72 angeordnet, die im wesentlichen aus Gummi oder gummiartigem Kunststoff besteht und an ihrem einen Ende einen steifen Befestigungsring 74 aus Blech aufweist. Der Befestigungsring 74 ist im Querschnitt L-förmig und besteht somit aus einem im wesentlichen zylindrischen Kragen und einem im wesentlichen ebenen, radial nach außen ragenden Flansch. Der Kragen des Befestigungsrings 74 ist mit Preßsitz in die zylindrische Erweiterung 54 eingepreßt, wodurch er fest, jedoch zum Auswechseln der Dichtmanschette 72 lösbar, am Gehäuse 10 befestigt ist.

Das Gummi- oder sonstige Elastomermaterial der Dichtmanschette 72 bedeckt den Befestigungsring 74 an der radial inneren Seite seines zylindrischen Kragens und an der axial äußeren Seite seines Flansches, erstreckt sich um dessen radial äußere Kante herum und bildet auf der axial inneren, dem Gehäuse 10 zugewandten Seite dieses Flansches einen elastischen Rand 76, der gegen eine ebene Stirnfläche 78 des Gehäuses 10 abdichtet. Am anderen Ende der Dichtmanschette 72 ist ein Randwulst 80 ausgebildet, der in die Ringnut 40 des bolzenförmigen Gewindeteils 36 eingreift und dort ebenfalls abdichtet.

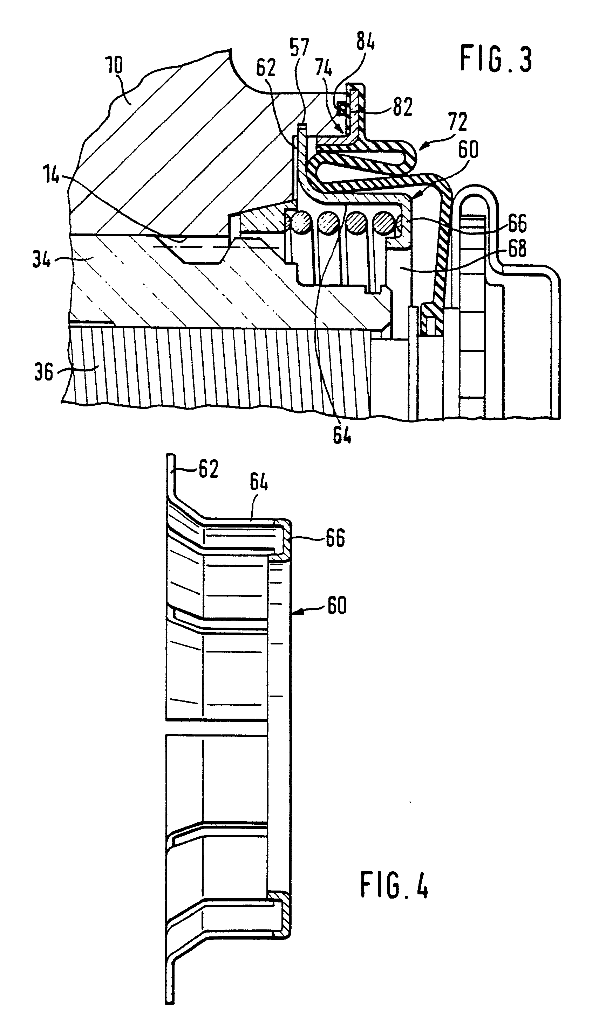

Bei der in Fig. 3 und 4 dargestellten bevorzugten Ausführungsform ist das topfartige Stützteil 60 an seinem radial äußeren Flansch 62 und Mantelabschnitt 64 geschlitzt und dadurch elastisch zusammendrückbar. Der Sicherungsring 58 ist fortgelassen und in die Ringnut 57 ist der Flansch 62 selbst eingerastet.

Gemäß Fig. 3 ist außerdem im Unterschied zu Fig. 2 an der radial inneren Seite des am Befestigungsring 74 ausgebildeten ebenen Flansches eine Ringdichtung 82 anvulkanisiert, die in eine Ringnut 84 an der Stirnfläche 78 des Gehäuses 10 eingreift.

Die Wirkungsweise der dargestellten und im Vorstehenden beschriebenen Betätigungsvorrichtung und deren automatische Nachstellung ist bekannt (siehe z. B. die erwähnte GB-A-14 12 151 S.3 Z.8-42).

## Patentansprüche

1. Nachstellbare Betätigungsvorrichtung für Bremsen, insbesondere Fahrzeug-Trommelbremsen, mit
- einem Gehäuse (10), das eine Bohrung (14) und eine dazu konzentrische Kupplungsfläche (48) aufweist,
- mindestens einem Stößel (30) von veränderbarer Länge, der in der Bohrung (14) verschiebbar geführt ist und zwei durch eine selbsthemmende Gewindepaarung (38) miteinander verbundene Gewindeteile (34, 36) aufweist,
- einem Kupplungsteil (50), das der Kupplungsfläche (48) des Gehäuses (10) zugeordnet und mit einem der beiden Gewindeteile (34) durch eine selbsthemmungsfreie Gewindepaarung (52) verbunden ist,
- einem Stützteil (60), das am Gehäuse (10) befestigt ist und eine Öffnung (68) aufweist, durch die sich mindestens das andere der beiden Gewindeteile (36) hindurcherstreckt,
- einer Kupplungsfeder (70), die zwischen dem Stützteil (60) und dem Kupplungsteil (50) eingespannt und bestrebt ist, dieses an der Kupplungsfläche (48) anliegend zu halten, und
- einer Dichtmanschette (72), die in bezug auf das Gehäuse (10) außerhalb des Stützteils (60) angeordnet ist und die Gewindepaarungen (38, 52) sowie das Kupplungsteil (50) nach außen abdichtet, dadurch gekennzeichnet, daß
- die Dichtmanschette (72) einen steifen Befestigungsring (74) von L-förmigem Querschnitt mit einem im wesentlichen zylindrischen Kragen und einem im wesentlichen ebenen, radial nach außen ragenden Flansch aufweist,

- der Kragen mit Preßsitz in einer Erweiterung (54) der Bohrung (14) des Gehäuses (10) befestigt ist,
- der Flansch zwischen sich und einer Stirnfläche (78) des Gehäuses (10) einen ringförmigen elastischen Rand (76) der Dichtmanschette (72) eingespannt hält, und
- die Erweiterung (54) der Bohrung (14) axial innerhalb des Kragens eine Anlagefläche aufweist, hinter der das Stützteil (60) unabhängig vom Kragen lösbar gehalten ist.

2. Betätigungsvorrichtung nach Anspruch 1, dadurch gekennzeichnet, daß die Anlagefläche von einem Sicherungsring (58) gebildet ist, der elastisch in eine Ringnut (57) in der Erweiterung (54) der Bohrung (14) eingerastet ist.

3. Betätigungsvorrichtung nach Anspruch 1, dadurch gekennzeichnet, daß das Stützteil (60) einen geschlitzten Flansch (62) aufweist, der unmittelbar in eine Ringnut (57) in der Erweiterung (54) der Bohrung (14) eingerastet ist.

## Claims

1. An adjustable brake actuator, especially for vehicle drum brakes, comprising
- a casing (10) which has a bore (14) and a coupling face (48) concentric with said bore,
- at least one tappet (30) of variable length guided to slide in the bore (14) and including two threaded members (34, 36) which are interconnected by a self-locking screw thread pair (38),
- a coupling member (50) associated with the coupling face (48) of the casing (10) and connected to one of the two threaded members (34) by a non-self-locking screw thread pair (52),
- a support member (60) fixed to the casing (10) and having an aperture (68) through which extends at least the other one of the two threaded members (36),
- a coupling spring (70) inserted between the support member (60) and the coupling member (50) and tending to keep the latter in engagement with the coupling face (48), and
- a sealing sleeve (72) disposed outside of the support member (60) with respect to the casing (10) and providing an external seal for the screw thread pairs (38, 52) and the coupling member (50), characterized in that
- the sealing sleeve (72) comprises a stiff retainer ring (74) of L-shaped cross-section having a substantially cylindrical collar and a substantially plane radially outwardly projecting flange,
- the collar is secured with press fit in an enlargement (54) of the bore (14) of the housing (10),
- the flange holds clamped between itself and an end surface (78) of the casing (10) an annular elastic rim (76) of the sealing sleeve (72), and
- the enlargement (54) of the bore (14) comprises axially within the collar a shoulder behind which the support member (60) is detachably held independently of the collar.

2. An actuator according to claim 1, characterized in that the shoulder is formed by a locking ring (58) which is elastically engaged into an annular groove (57) formed in the enlargement (54) of the bore (14).

3. An actuator according to claim 1, characterized in that the support member (60) includes a slotted flange (62) which is engaged directly into an annular groove (57) formed in the enlargement (54) of the bore (14).

**Revendications**

1. Dispositif de réglage automatique pour frein, en particulier pour frein de tambour pour véhicules, avec
   - un carter (10), qui possède un alésage (14) et une surface d'accouplement (48) qui lui est coaxiale,
   - au moins un poussoir (30) de longueur modifiable, qui est guidé de manière mobile dans l'alésage (14) et comporte deux parties filetées (34, 36) qui sont reliées ensemble par un ajustement fileté (38) auto-indesserrable,
   - une partie d'accouplement (50), qui correspond à la surface d'accouplement (48) du carter (10) et qui est reliée à l'une des deux parties filetées (34) par un ajustement fileté auto-indesserrable (52),
   - une partie d'appui (60), qui est fixée sur le carter (10), et qui présente une ouverture (68) à travers laquelle s'étend au moins l'autre des deux parties filetées (36),
   - un ressort d'accouplement (70), qui est monté avec précontrainte entre la partie d'appui (60) et la partie d'accouplement (50) et tend à maintenir celle-ci appuyée contre la surface d'accouplement (48) et
   - une manchette d'étanchéité (72), qui est disposée à l'extérieur de la partie d'appui (60) par rapport au carter (10), et qui assure l'étanchéité vers l'extérieur pour les ajustements filetés (38, 52) et pour la partie d'accouplement (50), caractérisé en ce que,
   - la manchette d'étanchéité (72) comporte un anneau de fixation (74), rigide et de section en forme de L, avec un collet essentiellement cylindrique, et une bride essentiellement plane saillant radialement vers l'extérieur,
   - ledit collet est fixé avec un ajustement pressé, dans un élargissement (54) de l'alésage (14) du carter (10),
   - ladite bride maintient encastrée une bordure (76) élastique et de forme annulaire, de la manchette d'étanchéité (72), entre elle-même et une surface frontale (78) du carter (10), et
   - en ce que l'élargissement (54) de l'alésage (14) possède une surface d'appui qui est située axialement à l'intérieur par rapport au collet, derrière laquelle la partie d'appui (60) est maintenue libre, indépendamment du collet.

2. Dispositif de réglage selon la revendication 1, caractérisé en ce que la surface d'appui est constituée par un anneau de sécurité (58), qui est encliqueté élastiquement dans une gorge annulaire (57) prévue dans l'élargissement (54) de l'alésage (14).

3. Dispositif de réglage selon la revendication 1, caractérisé en ce que la partie d'appui (60) comporte une bride (62) fendue, qui est directement encliquetée dans une gorge annulaire (57) prévue dans l'élargissement (54) de l'alésage (14).

FIG.1

FIG.2

FIG.3

FIG.4